# EUROPÄISCHE PATENTSCHRIFT

(11) **EP 1 404 951 B1**
(45) Veröffentlichungstag und Bekanntmachung des Hinweises auf die Patenterteilung: **17.11.2004**
(21) Anmeldenummer: 02743251.7
(22) Anmeldetag: 02.07.2002
(51) Int. Cl.: F02B 19/10, F02D 19/02, F02M 21/02

(54) **VORKAMMERANREICHERUNG**
PRE-COMBUSTION CHAMBER ENRICHMENT
ENRICHISSEMENT DANS LA CHAMBRE DE PRECOMBUSTION

(30) Priorität: 07.07.2001 DE 10133190
(43) Veröffentlichungstag der Anmeldung: 07.04.2004
(73) Patentinhaber: DEUTZ Aktiengesellschaft, 51063 Köln (DE)
(72) Erfinder: WEICKEL, Hans, 68307 Mannheim (DE); STELLWAGEN, Karl, 67227 Frankenthal (DE); BERGER, Olaf, 67165 Waldsee (DE)
(86) Internationale Anmeldenummer: PCT/EP2002/007270
(87) Internationale Veröffentlichungsnummer: WO 2003/008777

(56) Entgegenhaltungen:
- US-A- 4 306 526
- US-A- 4 638 777
- US-A- 5 555 868
- US-A- 6 095 112
- PATENT ABSTRACTS OF JAPAN vol. 1996, no. 09, 30. September 1996 (1996-09-30) & JP 08 121256 A (YANMAR DIESEL ENGINE CO LTD), 14. Mai 1996 (1996-05-14)
- PATENT ABSTRACTS OF JAPAN vol. 2000, no. 14, 5. März 2001 (2001-03-05) & JP 2000 320369 A (MITSUBISHI HEAVY IND LTD), 21. November 2000 (2000-11-21)
- PATENT ABSTRACTS OF JAPAN vol. 1998, no. 11, 30. September 1998 (1998-09-30) & JP 10 153145 A (MEIDENSHA CORP), 9. Juni 1998 (1998-06-09)
- PATENT ABSTRACTS OF JAPAN vol. 1998, no. 06, 30. April 1998 (1998-04-30) & JP 10 047096 A (YANMAR DIESEL ENGINE CO LTD), 17. Februar 1998 (1998-02-17)
- PATENT ABSTRACTS OF JAPAN vol. 1998, no. 06, 30. April 1998 (1998-04-30) & JP 10 047165 A (YANMAR DIESEL ENGINE CO LTD), 17. Februar 1998 (1998-02-17)

## Beschreibung

Die Erfindung betrifft ein Verfahren zum Betreiben einer Brennkraftmaschine mit einem Kurbelgehäuse, in dem eine Kurbelwelle drehbar gelagert ist, an der zumindest ein Pleuel angelenkt ist, das einen Kolben trägt, der in einem von einem Zylinderkopf abgedeckten Zylinder unter Bildung eines Arbeitsraums bewegt wird, wobei dem Arbeitsraum als Hauptbrennstoff ein Luft-Gas-Gemisch über einen Gaswechselkanal im Zylinderkopf zugeführt wird, wobei das zugeführte Luft-Gas-Gemisch zumindest vorübergehend durch einen Anfettungsbrennstoff angefettet wird, wobei in dem Zylinderkopf eine Zündvorrichtung vorhanden ist und wobei der Anfettungsbrennstoff in eine Zündkammer der Zündvorrichtung eingebracht wird. Weiterhin betrifft die Erfindung eine derartig ausgebildete Brennkraftmaschine.

Ein derartiges Verfahren und eine derartige Brennkraftmaschine sind aus der DE 29 21 997 A1 bekannt. Dieses Dokument beschreibt ein Zündsystem für einen Gasmotor, bei dem in den Zylinderkopf ein Einsatz eingesetzt ist, bestehend aus einem zylindrigen Bauteil, das eine Zündvorrichtung und ein kanalförmig ausgebildetes Zuführrohr für Anfettungsbrennstoff aufnimmt und eine dem zylindrigen Bauteil brennraumseitig vorgesetzte Zündkammer. Weiterhin sind Angaben zu stöchiometrischen Luft-/Brennstoffgemischen des Luft-Gas-Gemisches und des Anfettungsbrennstoffes gemacht.

Die weiterhin bekannte EP 0 906 500 B1 beschreibt ein Zündsystem für einen Gasmotor, bei dem in den Zylinderkopf eine Zündkammer eingesetzt ist, in der ein Luft-Gas-Gemisch über eine Zündvorrichtung entflammbar ist. Dabei ist die Zündkammer gegenüber dem Arbeitsraum der Brennkraftmaschine absperrbar. Durch diese Ausbildung ist eine genaue und sichere Bestimmung des Entflammungszeitpunktes des Luft-Gas-Gemisches möglich.

Der Erfindung liegt die Aufgabe zugrunde, eine Brennkraftmaschine und ein Verfahren zum Betreiben der Brennkraftmaschine zur Verfügung zu stellen, mit der bzw. mit dem ein zuverlässiger Betrieb der Brennkraftmaschine möglich ist.

Diese Aufgabe wird dadurch gelöst, dass der Anfettungsbrennstoff ein Gas-Luft-Gemisch ist, dass die Zusammensetzung des Anfettungsbrennstoffes einstellbar ist und dass der Anfettungsbrennstoff einem Gasmischer zur Einstellung des Hauptbrennstoffs über eine Entnahmesonde entnommen wird. Hierzu ist bei der entsprechend ausgebildeten Brennkraftmaschine in den Zylinderkopf ein von einer Zylinderkopfaußenwand in die Zündkammer reichender (mehrteiliger) Kanal eingearbeitet. Bei mehrzylindrigen Brennkraftmaschinen ist es möglich, die Kanäle innerhalb oder außerhalb des Zylinderkopfs zusammenzuführen. Durch den Kanal ist gesteuert ein Gas oder ein Gas-Luft-Gemisch in die Zündkammer einleitbar. Durch diese Ausbildung bzw. dieses Verfahren ist es möglich, die vorhandenen Zyklusschwankungen des Zünddruckes zu verringern. Als Folge davon wird durch kleinere Zyklusschwankungen eine Absenkung des Brennstoffverbrauches erreicht. Eine gleichmäßigere Verbrennung, die eine direkte Folge verringerter Zyklusschwankungen ist, hat außerdem den Vorteil eines ruhigeren Brennkraftmaschinenlaufes, da einzelne extrem hohe Zünddruckspitzen wegfallen. Dadurch ergibt sich weiterhin eine geringere mechanische Bauteilbelastung der Brennkraftmaschine. Das Gas kann beispielsweise Erdgas sein und das Gas-Luft-Gemisch weist gegenüber dem Luft-Gas-Gemisch vorzugsweise eine andere, insbesondere leichter entzündbare Zusammensetzung auf. Die Zusammensetzung des Gas-Luft-Gemisches ist einstellbar. Dadurch kann einerseits bei sich ändernder Zusammensetzung des Hauptbrennstoffs, beispielsweise bei einer Absenkung des Gasanteils durch entsprechende Erhöhung des Gasanteils bei dem Gas-Luft-Gemisch eine kontinuierliche, zuverlässige Entzündung des Hauptbrennstoffs erreicht werden. Andererseits kann bei konstanter Zusammensetzung des Hauptbrennstoffs durch Änderung der Zusammensetzung des Anfettungsbrennstoffs auf sich ändernde Anforderungen hinsichtlich des

Betriebs der Brennkraftmaschine eingegangen werden. Die Einstellung der Zusammensetzung erfolgt vorzugsweise mittels einer elektronisch gesteuerten Steuereinrichtung oder Regeleinrichtung, die anhand von Vorgaben bezüglich des gewünschten Betriebs der Brennkraftmaschine sowie einer Kennfeldauswertung und/oder über ermittelte Betriebszustände beispielsweise durch Sensoren (Gas, Klopf, Temperatur) die Einstellung vornimmt.

In bevorzugter Weiterbildung wird der Anfettungsbrennstoff einem Gasmischer zur Einstellung des Hauptbrennstoffs über eine Entnahmesonde entnommen, wobei in weiter Ausgestaltung die Position der Entnahmeeintrittsöffnung der Entnahmesonde in Bezug zu dem Gasstrom in dem Gasmischer verstellbar ist. Diese Ausgestaltung stellt einen nur verhältnismäßig geringen Bauaufwand dar, mit dem aber ein zuverlässig arbeitendes System realisiert ist.

In Weiterbildung ist die Zündkammer mit einem Spülgas durchspülbar. Diese Durchspülung erfolgt, um nach erfolgter Verbrennung Restgase aus der Zündkammer auszuspülen. Diese können die Qualität von neu zugeführtem Anfettungsbrennstoff verschlechtern und/oder eine Verschmutzung der Zündkammer einschließlich der Zündvorrichtung bewirken. Das Spülgas kann der unveränderte Anfettungsbrennstoff oder aber auch durch Reduzierung oder Abstellung der Gaszufuhr nur Luft sein. Wegen der geringen Spülgasmenge ist aber die Durchspülung mit Anfettungsbrennstoff problemlos möglich.

Darauf hingewiesen wird, dass im Rahmen der Erfindung das Gas oder das Gas-Luft-Gemisch auch in den Arbeitsraum und/oder eine Vorkammer in dem Zylinderkopf eingebracht werden kann. Hierbei erfolgt die Auswahl insbesondere nach der Größe des Arbeitsraums. Dabei ist die Vorkammer bevorzugt die Zündkammer der Kammerkerze, die in den Zylinderkopf eingesetzt ist, wobei die Vorkammer selbstverständlich auch als eigenständige Kammer direkt in den Zylinderkopf eingesetzt sein kann.

Weiterhin ist in jeden zu einer Zündkammer oder einen Arbeitsraum führenden Kanal ein Flammenfilter eingesetzt, das ein Zurückschlagen von Flammen verhindert.

In Weiterbildung der Erfindung ist in die Kammerkerze ein den Kanal beherrschendes Ventil eingebaut. Dieses Ventil kann ein Rückschlagventil, ein gesteuertes Ventil oder ein Ventil mit Drosselwirkung sein. Durch dieses Ventil wird der Grad der Anreicherung eingestellt. Insbesondere bei Anordnung des Ventils im Bereich des Dichtsitzes der Kammerkerze ist eine zuverlässige Kühlung des Ventils gewährleistet und eine Verkokung des Ventils ausgeschlossen.

Allgemein ist zu der Zündung des Luft-Gas-Gemisches festzustellen, dass diese bei Brennkraftmaschinen mit großem Arbeitsraum über eine Kammerkerze mit einer vergrößerten Vorkammer bzw. Zündkammer zur schnelleren Entflammung des Luft-Gas-Gemisches im Arbeitsraum erfolgt. Bei Brennkraftmaschinen mit kleinerem Arbeitsraum genügt oft eine konventionelle, kostengünstigere Zündkerze für eine gute Entflammung. In diesem Fall mündet der Kanal direkt in den Arbeitsraum. Der Vorteil dieses Konzeptes besteht darin, dass kein wesentlicher Gasdruck vorhanden sein muss.

Bei einer Anreicherung mit einem Gas-Luft-Gemisch können auch zwei oder mehrere Rückschlagventile vorgesehen sein.

Weitere Vorteile der Erfindung sind der Zeichnungsbeschreibung zu entnehmen, in der ein Ausführungsbeispiel der Erfindung näher beschrieben ist.

Es zeigen:
- Fig. 1: einen Teilschnitt durch einen Zylinderkopf und
- Fig. 2: einen Teilschnitt durch einen Gasmischer mit hineinragender Entnahmesonde für den Anfettungsbrennstoff.

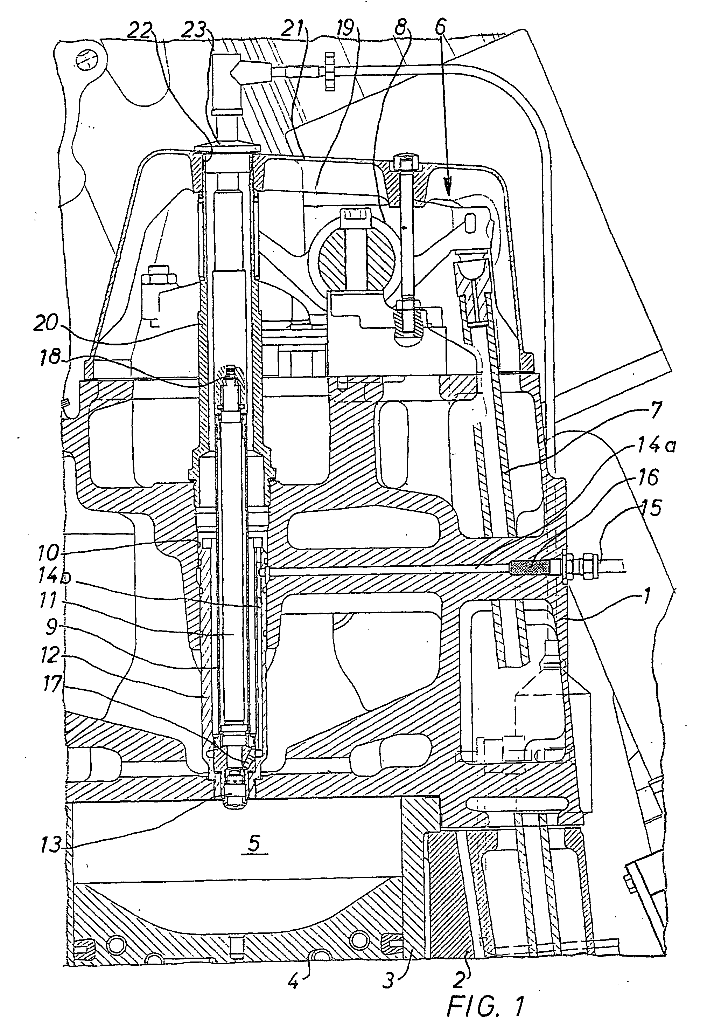

Figur 1 zeigt einen Teilschnitt durch einen Zylinderkopf 1 einer Brennkraftmaschine, die basierend auf einer selbstzündenden Brennkraftmaschine zum Betrieb mit einem Luft-Gas-Gemisch ausgelegt ist. Der Zylinderkopf 1 stützt sich auf einem Kurbelgehäuse oder Zwischengehäuse 2 der Brennkraftmaschine ab. Zwischen dem Zwischengehäuse 2 und dem Zylinderkopf 1 ist eine Zylinderlaufbuchse 3 eingespannt, in der ein Kolben 4 bewegbar ist. Zwischen dem Kolben 4 und dem Zylinderkopf 1 ist ein Arbeitsraum 5 gebildet, wobei dem Arbeitsraum 5 über Gaswechselkanäle, die von einem Ventiltrieb 6 beherrscht werden, ein Luft-Gas-Gemisch zugeführt und nach der Verbrennung wieder abgeführt wird. Der Ventiltrieb 6 wird von einer Nockenwelle in dem Kurbelgehäuse der Brennkraftmaschine betätigt und weist zur Betätigung der Gaswechselventile Stößelstangen 7 und Kipphebel 8 auf.

Zur Entzündung des Luft-Gas-Gemisches in dem Arbeitsraum 5 ist eine Kammerkerze 9 in eine Ausnehmung 10 des Zylinderkopfs 1 eingesetzt. Die Kammerkerze 9 weist die eigentliche Zündkerze 11 auf, die in eine in die Ausnehmung 10 eingesetzte Hülse 12 eingebaut ist. In dem dem Arbeitsraum 5 zugewandten Endbereich der Kammerkerze 9 ist in der Hülse 12 der Zündkerze 11 vorgelagert eine Zündkammer 13 angeordnet, in die über eine oder mehrere Durchtrittsöffnungen aus dem Arbeitsraum 5 Luft-Gas-Gemisch hineingelangt. Dieses Luft-Gas-Gemisch wird durch die Zündkerze 11 entflammt. Zur Verringerung der vorhandenen Zyklusschwankungen des Zünddruckes ist das in die Zündkammer 13 eingedrungene Luft-Gas-Gemisch gezielt anfettbar. Diese Anfettung erfolgt durch Zuführung von einem Gas, speziell Erdgas, oder einem Gas-Luft-Gemisch direkt in die Zündkammer 13. Dies erfolgt über einen in den Zylinderkopf 1 eingearbeiteten Kanal 14a, der von einer Zylinderkopfwand bis in die Ausnehmung 10 geführt ist und durch einen weiteren Kanal 14 b in der Hülse 12 in die Zündkammer 13 weitergeführt ist. Dabei ist der Kanal 14a auf der der Ausnehmung 10 gegenüberliegenden Seite mit einer Gaszuführleitung 15 verbunden. Vorteilhaft im Bereich dieser Verbindung ist in den Zylinderkopf 1 bzw. in den Kanal 14a ein Flammfilter 16 eingesetzt, das das Übergreifen von möglicherweise in den Kanal 14 a zurückschlagenden Flammen in die Gaszuführleitung 15 verhindert. In die Hülse 12 der Kammerkerze 9 ist im Bereich des Dichtsitzes 24 vor der Zündkammer 13 ein Ventil 17 eingesetzt, mit dem die der Zündkammer 13 zugeführte Gasmenge bzw. Gas-Luft-Gemisch-Menge gesteuert wird.

Die Kammerkerze 9 ragt mit ihrem elektrischen Anschluss in den Bereich des oberhalb des Zylinderkopfes 1 liegenden Kipphebelraums 19 hinein und ist gegenüber diesem durch eine Spannhülse 20, die in den Zylinderkopf 1 einschraubbar ist und die Kammerkerze 13 unverrückbar in der Ausnehmung 10 festlegt, öldicht abgeschirmt. Die Spannhülse 20 wirkt ihrerseits mit einem Kipphebeldeckel 21 zusammen bzw. ist bis in eine Durchtrittsöffnung 22 in dem Kipphebeldeckel 21 geführt. Diese Durchtrittsöffnung 22 ist durch eine Kappe 23 unter gleichzeitiger Durchführung des elektrischen Anschlusses für die Zünderkerze 11 verschließbar.

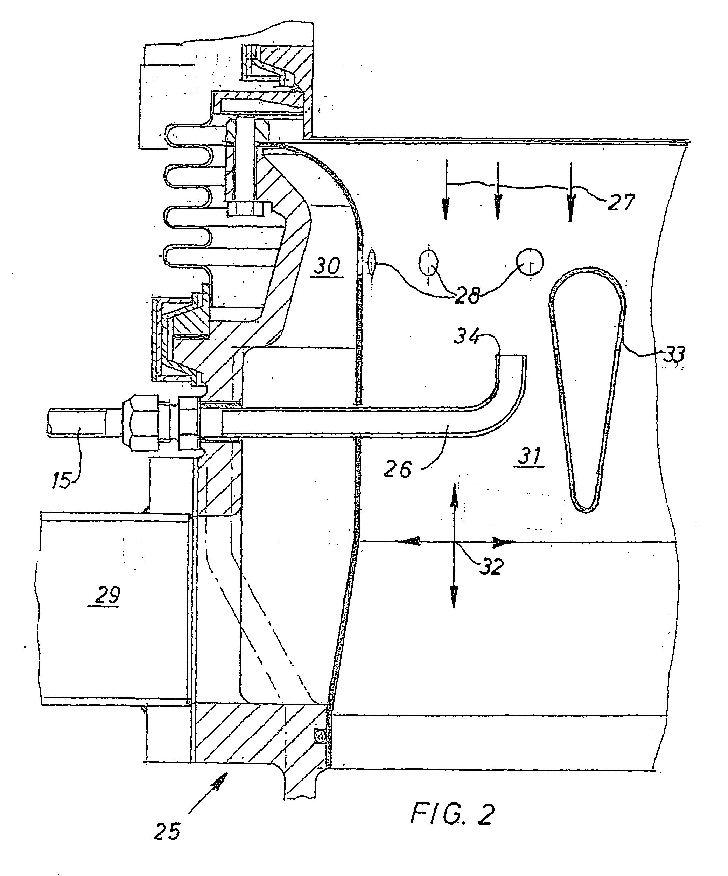

Figur 2 zeigt einen Teilschnitt durch einen Gasmischer 25 mit hineinragender Entnahmesonde 26 für den Anfettungsbrennstoff. Das Venturirohr 31 des Gasmischers 25 wird in Pfeilrichtung 27 von Luft durchströmt. Aus den Öffnungen 28 wird Gas, beispielsweise Erdgas in das Venturirohr 31 eingebracht. Das Gas wird dabei über eine Zufuhrleitung 29 in einen Ringraum 30,von dem die Öffnungen 28 abgehen, steuerbar geleitet. In dem Venturirohr 31 vermischt sich die Luft mit den Gas zu dem Hauptbrennstoff, dem Luft-Gas-Gemisch. Einstellbar ist das Luft-Gas-Gemisch durch Verschieben des Venturirohres 31 und/oder der Entnahmesonde 26 in eine der Pfeilrichtungen 32, wobei der Strömungskörper 33 ortsfest angeordnet ist. Durch das Verschieben wird die Position der Entnahmesonde 26 in Bezug zu dem Strömungskörper 33 verstellt. Dies bewirkt eine Änderung des Durchmessers des Venturirohres 31 im Bereich der Entnahmestelle. Dadurch ändert sich auch die durch die Entnahmeeintrittsöffnung 34 in die Entnahmesonde 26 eintretende den Anfettungsbrennstoff bildende Gas-Luft-Gemisch.

## Patentansprüche

1. Verfahren zum Betreiben einer Brennkraftmaschine mit einem Kurbelgehäuse (2), in dem eine Kurbelwelle drehbar gelagert ist, an der zumindest ein Pleuel angelenkt ist, das einen Kolben (4) trägt, der in einem von einem Zylinderkopf (1) abgedeckten Zylinder unter Bildung eines Arbeitsraums (5) bewegt wird, wobei dem Arbeitsraum (5) als Hauptbrennstoff ein Luft-Gas-Gemisch über einen Gaswechseikanal im Zylinderkopf (1) zugeführt wird, wobei das zugeführte Luft-Gas-Gemisch zumindest vorübergehend durch einen Anfettungsbrennstoff angefettet wird, wobei in dem Zylinderkopf (1) eine Zündvorrichtung (11) vorhanden ist und wobei der Anfettungsbrennstoff in eine Zündkammer (13) der Zündvorrichtung (11) eingebracht wird,
**dadurch gekennzeichnet, dass** der Anfettungsbrennsfofi ein Gas-Luft-Gemisch ist, dass die Zusammensetzung des Ahfettungsbrennstoffes einstellbar ist und dass der Anfettungsbrennstoff einem Gasmischer (25) zur Einstellung des Hauptbrennstoffs über eine Entnahmesonde (26) entnommen wird.

2. Verfahren nach Anspruch 1,
**dadurch gekennzeichnet, dass** die Position der Entnahmeeintrittsöffnung der Entnahmesonde (26) in Bezug zu dem Gasstrom in dem Gasmischer (25) verstellbar ist.

3. Verfahren nach einem der vorherigen Ansprüche,
**dadurch gekennzeichnet, dass** die Zündkammer (11) mit einem Spülgas durchspülbar ist.

4. Brennkraftmaschine mit einem Kurbelgehäuse (2), in dem eine Kurbelwelle drehbar gelagert ist, an der zumindest ein Pleuel angelenkt ist, das einen Kolben (4) trägt, der in einem von einem Zylinderkopf (1) abgedeckten Zylinder unter Bildung eines Arbeitsraums (5) bewegbar ist, wobei dem Arbeitsraum (5) als Hauptbrennstoff ein Luft-Gas-Gemisch über einen Gaswechselkanal im Zylinderkopf (1) zuführbar ist, wobei in dem Zylinderkopf (1) eine als Kammerkerze ausgebildete Zündvorrichtung (11) vorhanden ist und wobei dass zugeführte Luft-Gas-Gemisch zumindest vorübergehend angefettet wird, indem durch einen Kanal gesteuert Anfettungsbrennstoff in eine der Kammerkerzen (9) vorgelagerten Zündkammer (13) leitbar ist,
**dadurch gekennzeichnet, dass** in den Zylinderkopf (1) ein von einer Zylinderkopfaußenwand in eine Zündkammer (13) der Kammerkerze (9) reichender Kanal (14a, 14b) eingelassen ist, dass die Zusammensetzung des als Anfettungsbrennstoff zugeführten Gas-Luft-Gemisches einstellbar ist und dass das Gas-Luft-Gemisch einem Gasmischer (25) des Hauptbrennstoffs entnommen wird.

5. Brennkraftmaschine nach Anspruch 4,
**dadurch gekennzeichnet, dass** in den Zylinderkopf (1) und/oder in die Kammerkerze (9) ein den Kanal (14a, 14b) beherrschendes Ventil (17) eingebaut ist

6. Brennkraftmaschine nach Anspruch 5,
**dadurch gekennzeichnet, dass** das Ventil (17) ein Rückschlagventil ist.

7. Brennkraftmaschine nach Anspruch 5 oder 6,
**dadurch gekennzeichnet, dass** das Ventil (17) im Bereich des Dichtsitzes (24) der Kammerkerze (9) in dem Zylinderkopf (1) angeordnet ist.

8. Brennkraftmaschine nach einem der Ansprüche 4 bis 7,
**dadurch gekennzeichnet, dass** in den Kanal (14a, 14b) ein Flammfilter (16) eingesetzt ist.

9. Brennkraftmaschine nach einem der Ansprüche 4 bis 8,
**dadurch gekennzeichnet, dass** der Anfettungsbrennstoff ein Gas-Luft-Gemisch ist.

10. Brennkraftmaschine nach einem der Ansprüche 4-9,
**dadurch gekennzeichnet, dass** in den Gasmischer eine Entnahmesonde hineinragt.

11. Brennkraftmaschine nach Anspruch 10,
**dadurch gekennzeichnet, dass** die Position der Entnahmeeintrittsöffnung der Entnahmesonde (26) in Bezug zu dem Gasstrom in dem Gasmischer verstellbar ist.

## Claims

1. Method for operating an internal combustion engine having a crankcase (2), in which a crankshaft is rotatably mounted, on which crankshaft at least one connecting rod is articulately mounted, bearing a piston (4) which is moved in a cylinder covered by a cylinder head (1) so as to form a working space (5), an air/gas mix being fed to the working space (5) as main fuel via a gas exchange passage in the cylinder head (1), the air/gas mix supplied, at least temporarily, being enriched by an enrichment fuel, an ignition device (11) being present in the cylinder head (1), and the enrichment fuel being introduced into an ignition chamber (13) of the ignition device (11), **characterized in that** the enrichment fuel is a gas/air mix, **in that** the composition of the enrichment fuel is settable, and **in that** the enrichment fuel is removed from a gas mixer (25) for setting the main fuel via a removal probe (26).

2. Method according to Claim 1, **characterized in that** the position of the removal inlet opening of the removal probe (26) is adjustable with respect to the gas stream in the gas mixer (25).

3. Method according to one of the preceding claims, **characterized in that** the ignition chamber (11) can be purged by a purge gas.

4. Internal combustion engine having a crankcase (2), in which a crankshaft is rotatably mounted, on which crankshaft at least one connecting rod is articulately mounted, bearing a piston (4) which can move in a cylinder covered by a cylinder head (1) so as to form a working space (5), it being possible for an air/gas mix to be fed to the working space (5) as main fuel via a gas exchange passage in the cylinder head (1), an ignition device (11), which is formed as a chamber ignition plug, being present in the cylinder head (1), and the air/gas mix supplied, at least temporarily, being enriched by virtue of the fact that enrichment fuel can be passed into an ignition chamber (13) upstream of the chamber ignition plugs (9) under control by a passage, **characterized in that** a passage (14a, 14b), which extends from a cylinder head outer wall into an ignition chamber (13) of the chamber ignition plug (9), is recessed into the cylinder head (1), **in that** the composition of the gas/air mix supplied as enrichment fuel is settable, and **in that** the gas/air mix is removed from a gas mixer (25) for the main fuel.

5. Internal combustion engine according to Claim 4, **characterized in that** a valve (17) which controls the passage (14a, 14b) is incorporated in the cylinder head (1) and/or in the chamber ignition plug (9).

6. Internal combustion engine according to Claim 5, **characterized in that** the valve (17) is a nonreturn valve.

7. Internal combustion engine according to Claim 5 or 6, **characterized in that** the valve (17) is arranged in the region of the sealing seat (24) for the chamber ignition plug (9) in the cylinder head (1).

8. Internal combustion engine according to one of Claims 4 to 7, **characterized in that** a flame filter (16) is inserted in the passage (14a, 14b).

9. Internal combustion engine according to one of Claims 4 to 8, **characterized in that** the enrichment fuel is a gas/air mix.

10. Internal combustion engine according to one of Claims 4-9, **characterized in that** a removal probe projects into the gas mixer.

11. Internal combustion engine according to Claim 10, **characterized in that** the position of the removal inlet opening of the removal probe (26) is adjustable with respect to the gas stream in the gas mixer.

## Revendications

1. Procédé d'exploitation d'un moteur à combustion interne possédant un carter de vilebrequin (2) dans lequel est monté à rotation un vilebrequin sur lequel est articulée au moins une bielle qui porte un piston (4) qui est déplacé dans un cylindre recouvert par une culasse (1) en formant une chambre de travail (5), un mélange d'air et de gaz étant apporté comme combustible principal à la chambre de travail (5) par l'intermédiaire d'un canal de gaz à changement de charge prévu dans la culasse (1), le mélange apporté d'air et de gaz étant enrichi au moins provisoirement par un combustible d'enrichissement, un dispositif d'allumage (11) étant présent dans la culasse (1) et le combustible d'enrichissement étant introduit dans une chambre d'allumage (13) du dispositif d'allumage (11),
**caractérisé en ce que** le combustible d'enrichissement est un mélange de gaz et d'air, **en ce que** la composition du combustible d'enrichissement est réglable, et **en ce que** le combustible d'enrichissement est soutiré, par l'intermédiaire d'une sonde de soutirage (26), d'un mélangeur de gaz (25) destiné à régler la composition du combustible principal.

2. Procédé selon la revendication 1, **caractérisé en ce que** la position de l'ouverture d'entrée de soutirage de la sonde de soutirage (26), par rapport au flux de gaz dans le mélangeur de gaz (25), est modifiable.

3. Procédé selon l'une des revendications précédentes, **caractérisé en ce que** la chambre d'allumage (11) peut être balayée par un gaz de balayage.

4. Moteur à combustion interne possédant un carter de vilebrequin (2) dans lequel est monté à rotation un vilebrequin sur lequel est articulée au moins une bielle qui porte un piston (4) qui peut être déplacé dans un cylindre recouvert par une culasse (1) en formant une chambre de travail (5), un mélange d'air et de gaz pouvant être apporté comme combustible principal à la chambre de travail (5) par l'intermédiaire d'un canal de gaz à changement de charge prévu dans la culasse (1), un dispositif d'allumage (11) réalisé sous la forme d'une bougie à chambre étant présent dans la culasse (1) et le mélange apporté d'air et de gaz étant enrichi au moins provisoirement par le fait que du combustible d'enrichissement peut être dirigé de manière commandée, en passant par un canal, dans une chambre d'allumage (13) montée en avant de la bougie à chambre (9),
**caractérisé en ce qu'**un canal (14a, 14b), s'étendant à partir d'une paroi extérieure de la culasse jusque dans une chambre d'allumage (13) de la bougie à chambre (9), est ménagé dans la culasse (1), **en ce que** la composition du mélange de gaz et d'air apporté comme combustible d'enrichissement est réglable, et **en ce que** le mélange de gaz et d'air est soutiré d'un mélangeur de gaz (25) pour le combustible principal.

5. Moteur à combustion interne selon la revendication 4, **caractérisé en ce qu'**une soupape (17) commandant le canal (14a, 14b) est incorporée dans la culasse (1) et/ou dans la bougie à chambre (9).

6. Moteur à combustion interne selon la revendication 5, **caractérisé en ce que** la soupape (17) est une soupape de non-retour.

7. Moteur à combustion interne selon la revendication 5 ou 6, **caractérisé en ce que** la soupape (17) est disposée dans la culasse (1) dans la région du siège d'étanchéité (24) de la bougie à chambre (9).

8. Moteur à combustion interne selon l'une quelconque des revendications 4 à 7, **caractérisé en ce qu'**un filtre pare-flamme (16) est installé dans le canal (14a, 14b).

9. Moteur à combustion interne selon l'une quelconque des revendications 4 à 8, **caractérisé en ce que** le combustible d'enrichissement est un mélange de gaz et d'air.

10. Moteur à combustion interne selon l'une quelconque des revendications 4 à 9, **caractérisé en ce qu'**une sonde de soutirage s'enfonce dans le mélangeur de gaz.

11. Moteur à combustion interne selon la revendication 10, **caractérisé en ce que** la position de l'ouverture d'entrée de soutirage de la sonde de soutirage (26), par rapport au flux de gaz dans le mélangeur de gaz, est modifiable.
